# EUROPEAN PATENT SPECIFICATION

(11) **EP 3 362 836 B1**
(45) Date of publication and mention of the grant of the patent: **03.06.2020**
(21) Application number: 16801303.5
(22) Date of filing: 12.10.2016
(51) Int. Cl.: G02B 21/00

(54) **CONFOCAL MICROSCOPY APPARATUS AND RELATED PROCESS FOR ACQUIRING AND PROCESSING IMAGES**
KONFOKALE MIKROSKOPIEVORRICHTUNG UND ENTSPRECHENDES VERFAHREN ZUR AUFNAHME UND VERARBEITUNG VON BILDERN
APPAREIL DE MICROSCOPIE CONFOCALE ET PROCESSUS ASSOCIÉ D'ACQUISITION ET DE TRAITEMENT D'IMAGES

(30) Priority: 12.10.2015 IT UB20154591
(43) Date of publication of application: 22.08.2018
(73) Proprietor: Crestoptics S.p.A., 00167 Rome (IT)
(72) Inventor: RICCO, Vincenzo, 00167 Rome (IT); SANTINELLI, Andrea, 00167 Rome (IT)
(74) Representative: IP Sextant s.r.l.
(86) International application number: PCT/IB2016/056100
(87) International publication number: WO 2017/064629

(56) References cited:
- EP-A1- 2 733 514
- WO-A2-2012/063075
- DE-A1-102013 001 238
- JP-A- H1 048 530

## Description

The present invention concerns the fluorescence microscopy, in particular the confocal microscopy, and related to a confocal microscopy apparatus, and the related process for acquiring and processing images, that combines the use of a spinning disk with structured illumination, which apparatus allows to greatly reduce the noise present in the acquired images, in particular the level of the background noise due to the fluorescence from the out-of-focus planes and to the sample turbidity, consequently increasing the resolution of the acquired images in a simple, efficient, reliable, and inexpensive way.

In the last decades, fluorescence microscopy, also called dark field microscopy, has become a fundamental tool for research activity in biological field. The use of synthetic dyes and, subsequently, of the green fluorescent proteins, also known as GFP, has permitted to view with high resolution the interior of cells for both morphological and functional analysis, since the GFPs permit fluorescence microscopy even in vivo.

Since the applications in fluorescence are those currently most numerous and interesting for volume microscopy, in the following of the description reference will be mainly made to such applications of confocal microscopy. However, it should be noted that the invention may be applied in different fields of confocal microscopy, such as for instance the transmission microscopy and the reflection microscopy.

Confocal techniques, mainly confocal laser scanning microscopy (CLSM) and spinning disk confocal microscopy (SDCM), and super-resolution techniques, such as structured light microscopy and techniques based on small population of fluorescent cells, such as for instance photo-activated localization microscopy (PALM) and stochastic optical reconstruction microscopy (STORM), have permitted a further step forward, giving the possibility of improving the lateral resolution "x-y" (in the plane orthogonal to the optical axis, whereby it is assumed that the axes x and y lie on the sample plane) and the axial resolution "z" (along the optical axis that is orthogonal to the sample plane), and thus they have offered the possibility of making 3D reconstructions of the cell with a very high detail level (with resolutions which may arrive at tens of nanometers).

In particular, structured light microscopy techniques are based on the illumination of the sample (causing excitation of fluorescence) not in a uniform way, but according to a well-defined pattern, so as to obtain additional spatial information due to the interaction between the illumination pattern and the sample under test. After having acquired a single interaction image (i.e. a sub-frame), this is stored and the illumination pattern is moved to a next position. Thus, the acquisition of subsequent sub-frames progresses up to the coverage of the whole sample, and then the sub-frames are combined into a final image of the plane under test by using deconvolution algorithms which specifically depend on the type of pattern used.

However, such confocal and super-resolution techniques have some drawbacks.

First of all, the sample thickness is limited (it is generally difficult to make measurements on samples which are thicker than 20 micrometers) because of the scattering effects due to sample turbidity and fluorescence background due to the out-of-focus planes.

Moreover, the resolution capability is limited by the signal-to-noise ratio or S/N, wherein both the noise of the same image acquisition instrumentation and of the working environment and the fluorescence background noise due to the out-of-focus planes contribute to the whole noise. In particular, this ratio limits the use of high orders in polynomials constituting the deconvolution algorithm used in super-resolution structured light methods.

Finally, especially the super-resolution techniques entail long acquisition times which render its use for living cells difficult.

Making reference to structured light microscopy techniques, the number of sub-frames necessary for acquiring the whole sample plane and the type of deconvolution algorithm are mainly based on two possible classes of solutions: those using a quasi-sinusoidal pattern, as disclosed by M.G.L. Gustafsson in Surpassing the lateral resolution limit by a factor of two using structured illumination microscopy, Journal of Microscopy, Vol. 198 (Pt. 2), pp 82-87, May 2000, and those using a matrix of spots, as disclosed for instance in document WO2013144891.

The first solution offers shorter acquisition times since, depending on the image acquisition process and deconvolution algorithm used, typically requires a number of sub-frames ranging from 3 to 12.

The second solution requires a much larger number of sub-frames, depending on the ratio between the size of the single spot and the spacing between them, and it may arrive at requiring even more than 100 sub-frames per single plane of the sample.

Although the first solution offers a better performance in terms of speed, nevertheless it is more limited as to the maximum observable sample thickness (up to about 20 micrometers) and it has a proven resolution limit equal to half of the optical resolution limit (depending on the wavelength and objective used).

The second solution, at the expense of a longer acquisition time, offers a greater capability of penetration (even larger than 100 micrometers) and a resolution that seems to reach values better than 80 nanometers, according to some literature sources.

However, both techniques are limited by the noise present in the signal and, hence, by the level of background noise due to the fluorescence of the out-of-focus planes and to the sample turbidity. Also, since the fluorescence of the out-of-focus planes has the same dependency of the signal on the excitation light, the increase of the excitation intensity or of the time of exposure cannot improve performance beyond the limit due to the saturation of the acquisition sensor, e.g. a CCD or sCMOS (scientific CMOS) sensor.

In this context, the solution proposed according to the present invention is introduced, allowing to solve the aforementioned problems of the prior art solutions.

Therefore, it is an object of the present invention to increase the throughput signal (i.e. the useful signal), to examine even very thick samples, to improve the signal-to-noise ratio of the image permitting the use of high orders in the algorithms of image analysis, thus increasing the resolution of the images acquired according to the confocal microscopy technique in a simple, efficient, reliable, and inexpensive way.

It is specific subject matter of the present invention a confocal microscopy apparatus, comprising:
- a structured light generating component configured to be illuminated with a basic light beam and to generate a structured light beam focused on a first plane;
- a spinning disk configured to receive said structured light beam and to transmit a resulting excitation beam to an optics of a microscope focused on a plane of a sample, wherein the spinning disk lies on a second plane and comprises a disk-shaped substrate composed of an optically transparent material, the substrate of the spinning disk comprising a planar first surface and an opposing planar second surface and a patterned mask disposed on one of the first surface and the second surface and comprising at least one sector provided with one or more continuous spiral slit apertures, wherein the patterned mask or an outer surface thereof is composed of a highly black material opaque to light;
- a housing configured to house on a third plane an acquisition sensor configured to detect a fluorescent beam emitted from said plane of the sample;
- a set of relay lenses configured to optically conjugate the first plane, the second plane and said plane of the sample to the third plane;
- optical means configured to transmit said structured light beam from the structured light generating component to said plane of the sample and said emitted fluorescent beam from said plane of the sample to said housing configured to house the acquisition sensor; and
- moving means configured to move the structured light generating component, so as to shift the structured light beam in the first plane, and the spinning disk in the second plane.

According to another aspect of the invention, the structured light generating component may comprise a structured light generating substrate provided with at least one sector having a mask of material opaque to light according to a geometric pattern provided with a plurality of apertures of optically transparent material configured to make said basic light beam pass so as to obtain a structured light beam, whereby the first plane is the plane on which the structured light generating substrate lies.

According to a further aspect of the invention, the structured light generating substrate may be made of the optically transparent material having a coating opaque to light provided with said apertures.

According to an additional aspect of the invention, the optically transparent material of which the structured light generating substrate is made may be glass.

According to another aspect of the invention, the coating opaque to light of the structured light generating substrate may be made of chromium-based material.

According to a further aspect of the invention, said apertures with which the coating is provided may be made by photolithography.

According to an additional aspect of the invention, said apertures with which the coating is provided may be selected from the group comprising:
- parallel linear apertures, and
- circular holes arranged according to a matrix pattern.

According to another aspect of the invention, when said apertures with which the coating is provided are parallel linear apertures, they may have width ranging from 10 micrometers to 30 micrometers and a mutual distance ranging from 50 micrometers to 300 micrometers.

According to a further aspect of the invention, when said apertures with which the coating is provided are circular holes arranged according to a matrix pattern, the circular holes may have diameter ranging from 10 micrometers to 30 micrometers.

According to an additional aspect of the invention, when said apertures with which the coating is provided are circular holes arranged according to a matrix pattern, the circular holes may be disposed at the vertices of contiguous equal parallelograms, optionally rhombuses, more optionally square ones, and each circular hole may be spaced from the closest four circular holes by an equal distance optionally ranging from 50 micrometers to 300 micrometers.

According to another aspect of the invention, the structured light generating component may comprise an array of structured light generating microlenses, comprising a substrate provided on a face with a plurality of microlenses configured to generate said structured light beam focused on a focal plane.

According to a further aspect of the invention, said microlenses may be selected from the group comprising:
- generally cylindrical linear microlenses configured to focus the structured light beam on the focal plane according to parallel lines, and
- generally semicircular microlenses configured to focus the structured light beam on the focal plane according to circular spots disposed according to a matrix pattern.

According to an additional aspect of the invention, when said microlenses are generally cylindrical linear microlenses, these may be configured to focus the structured light beam on the focal plane according to parallel lines having width ranging from 10 micrometers to 30 micrometers and a mutual distance ranging from 50 micrometers to 300 micrometers.

According to another aspect of the invention, when said microlenses are generally semicircular microlenses, these may be configured to focus the structured light beam on the focal plane according to circular spots having diameter ranging from 10 micrometers to 30 micrometers.

According to a further aspect of the invention, when said microlenses are generally semicircular microlenses, these may be configured to focus the structured light beam on the focal plane according to circular spots disposed at the vertices of contiguous equal parallelograms, more optionally rhombuses, still more optionally square ones, whereby each circular spot may be spaced from the closest four circular spots by an equal distance optionally ranging from 50 micrometers to 300 micrometers.

According to an additional aspect of the invention, the substrate of the array of microlenses may be provided with a coating opaque to light subject to photolithography according to a geometrical pattern such that the coating is missing in correspondence with the microlenses, whereby each microlens is optically aligned with a corresponding aperture made in the coating.

According to another aspect of the invention, the coating opaque to light with which the substrate of the array of microlenses is provided may be made of chromium-based material.

According to a further aspect of the invention, the structured light generating component may comprise a digital micromirror device.

According to an additional aspect of the invention, said set of relay lenses may comprise a first relay lens, a second relay lens and a third relay lens, and said optical means may comprise a dichroic filter, wherein the first relay lens is configured to be crossed by said structured light beam, the dichroic filter is configured to reflect said structured light beam coming from the first relay lens towards the second relay lens that is configured to focus said structured light beam on the spinning disk, the dichroic filter being further configured to let said emitted fluorescent beam coming from the spinning disk (7) pass towards said housing configured to house the acquisition sensor.

According to another aspect of the invention, the apparatus may also comprise:
- a light source configured to emit said basic light beam;
- an acquisition sensor housed in said housing and configured to detect a fluorescent beam emitted from said plane of the sample; and
- a processing central unit configured to receive from the acquisition sensor a plurality of partial acquisitions of said plane of the sample and to combine such plurality of partial acquisitions into a final image of said plane of the sample by processing with structured light microscopy deconvolution algorithms.

According to a further aspect of the invention, the processing central unit may comprise one or more graphics processors or GPUs.

It is still specific subject matter of the present invention a process for acquiring and processing images in structured light confocal microscopy, comprising the following steps:
A. making a spinning disk be crossed by a structured light beam obtaining a resulting excitation light beam, wherein the spinning disk comprises a disk-shaped substrate composed of an optically transparent material, the substrate of the spinning disk comprising a planar first surface and an opposing planar second surface and a patterned mask disposed on one of the first surface and the second surface and comprising at least one sector provided with one or more continuous spiral slit apertures, wherein the patterned mask or an outer surface thereof is composed of a highly black material opaque to light;
B. focusing the resulting excitation beam on a plane of a sample;
C. acquiring a plurality of partial acquisitions of said plane of the sample; and
D. combining such plurality of partial acquisitions into a final image of said plane of the sample by processing with structured light microscopy deconvolution algorithms.

The invention is based on the joint use of a spinning disk provided with at least one continuous slit pattern and structured illumination with spot or bar pattern, wherein techniques of processing of images acquired by structured illumination confocal microscopy are applied, such as for instance those disclosed in document WO2013144891 or those disclosed by R. Heintzmann in Structured illumination methods, in Handbook of Biological Confocal microscopy, chapter 13, J.B. Pawley editor, New York, 2006.

This allows to obtain significant advantages over the prior art, e.g. permitting to use the structured light function to greatly improve performance in terms of spatial resolution, while the spinning disk permits to reduce the background noise, since the components due to the out-of-focus planes are blocked by the continuous slit configuration of the pattern of the spinning disk.

In particular, the continuous slit configuration of the pattern of the spinning disk permits to obtain a high value of throughput signal (i.e. of useful signal), consequently improving the Signal/Noise ratio and thus permitting the use of analysis algorithms (i.e. deconvolution algorithms) of high order and, in general, decreasing noise in the final reconstruction of the image of the whole sample plane.

The confocal microscopy apparatus according to the invention, and the related process for acquiring and processing images, allows, by eliminating the components of noise (namely the fluorescent and scattering background noise) due to the out-of-focus planes, to increase the penetration depth (i.e. the examinable sample thickness) and to use a more intense illumination without the effect of saturation of the detector (i.e. of the acquisition sensor) due to the unwanted contributions of the out-of-focus planes, since the latter are physically shielded by the spinning disk pattern.

The present invention will be now described, by way of illustration and not by way of limitation, according to its preferred embodiments, by particularly referring to the Figures of the annexed drawings, in which:
Figure 1 shows a schematic view of the acquisition portion of a first embodiment of the confocal microscopy apparatus according to the invention;
Figure 2 shows a schematic view of the acquisition portion of a second embodiment of the confocal microscopy apparatus according to the invention;
Figure 3A shows a top plan view of the structured light generating component of the acquisition portion of the apparatus of Figure 1, and Figure 3B shows an enlarged particular of the component of Figure 3A;
Figure 4A shows a top plan view of an alternative version of the structured light generating component of the acquisition portion of the apparatus of Figure 1, and Figure 4B shows an enlarged particular of the component of Figure 4A;
Figure 5 shows a cross-section view of a particular of the structured light generating component of the acquisition portion of the apparatus of Figure 2;
Figure 6A shows a top plan view of the spinning disk of the acquisition portion of the apparatus of Figure 1, and Figure 6B shows un enlarged particular of the spinning disk of Figure 6A;
Figure 7 shows a schematic cross-section view of the spinning disk of Figure 6A; and
Figure 8 shows a schematic view of the processing portion of the apparatus of Figure 1.

In the Figures identical reference numerals will be used for alike elements.

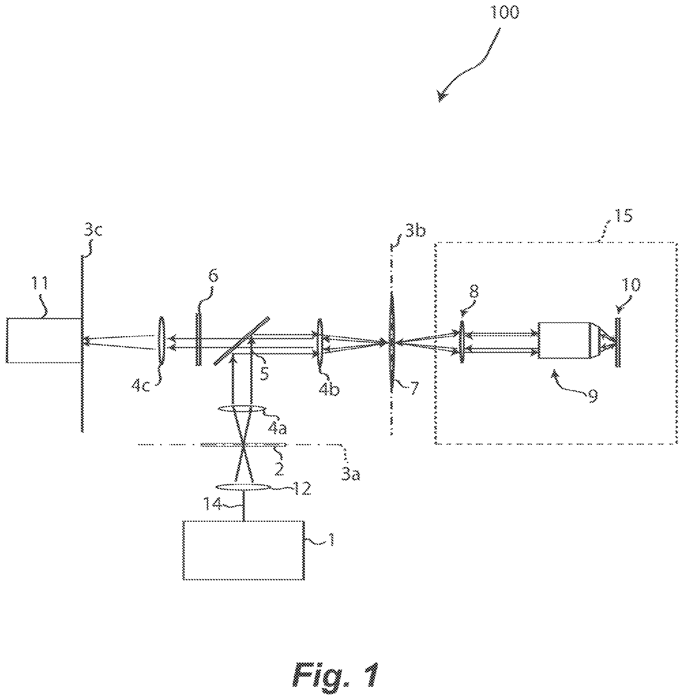

Figure 1 schematically shows a first embodiment of the confocal microscopy apparatus according to the invention, generally indicated with the reference numeral 100. It may be observed that the confocal microscopy apparatus 100 comprises a LED or laser light source 1 that, via an optical fibre 14, sends a basic light beam to an optical unit 12, comprising one or more lenses. The optical unit 12 makes the light collected by the optical fibre 14 (i.e. the basic light beam) pass through a structured light generating substrate 2 provided with two sectors having masks with geometrical pattern having apertures for the passage of light so as to obtain a structured light beam; in other words, the substrate 2 operates as structured light generating component. The features of the substrate 2, that is made of an optically transparent material, optionally glass that is subject to photolithography to obtain the structured light generating masks, are described in greater detail later.

The structured light beam crosses a first relay lens 4a (that, as known, is an optical unit formed by one or more conventional lenses and/or by an achromatic optical device), that may be moved along the longitudinal axis of the branch of the optical path of the structured light beam in which the first relay lens 4a is (whereby the first relay lens 4a may be moved closer to or farther away from the substrate 2), and it continues up to a dichroic filter 5 that reflects the same towards a second relay lens 4b, that may be moved along the longitudinal axis of the branch of the optical path of the structured light beam in which the second relay lens 4b is (whereby the second relay lens 4b may be moved closer to or farther away from the dichroic filter 5). The structured light beam crosses the second relay lens 4b that focuses the same beam on a spinning disk 7, that transmits a resulting excitation beam to an optics of a microscope 15, comprising tube lens(es) 8 and an objective 9, that in turn transmits the excitation beam by focusing the same on a plane of a sample 10.

The sample 10 in turn emits a fluorescent beam that goes back, crossing the optics of the microscope 15, the spinning disk 7 and the second relay lens 4b, towards the dichroic filter 5, that lets it pass towards an emission filter 6 that in turn selectively lets the emitted fluorescent beam pass. Optionally, the emission filter 6 may comprise two or more portions each one of which is configured to be crossed only by a respective portion of the fluorescent beam having a corresponding wavelength range (i.e. a corresponding frequency range); in this case, the emission filter 6 may be advantageously mounted on a wavelength selector, such as a motorised wheel (not shown) and/or piezoelectric devices and/or other motorised devices, that allows the automatic (computerised) selection of a specific portion of the filter 6 crossable only by fluorescent beam having a desired wavelength range. After having crossed the emission filter 6, the filtered emitted fluorescent beam crosses a third relay lens 4c that focuses the same on an acquisition sensor 11, optionally a CCD sensor or a sCMOS sensor. The third relay lens 4c may be moved along the longitudinal axis of the branch of the optical path of the emitted fluorescent beam in which the third relay lens 4c is (whereby the third relay lens 4c may be moved closer to or farther away from the emission filter 6).

In particular, the first relay lens 4a, the second relay lens 4b and the third relay lens 4c form a set of relay lenses that optically conjugates the optical plane on which the substrate 2 lies (plane 3a, i.e. the plane on which the structured light beam is focused), the plane on which the spinning disk 7 lies (plane 3b), and the plane of the sample 10 that is acquired to the plane 3c on which the acquisition sensor 11 lies.

In order to be capable to acquire an image of an entire plane of the sample 10, it is necessary to scan the latter by moving, in the plane perpendicular to the optical axis, both the structured light generating component (i.e., the substrate 2) and the spinning disk 7, through respective automated moving units, e.g. comprising piezoelectric devices and/or other motorised devices.

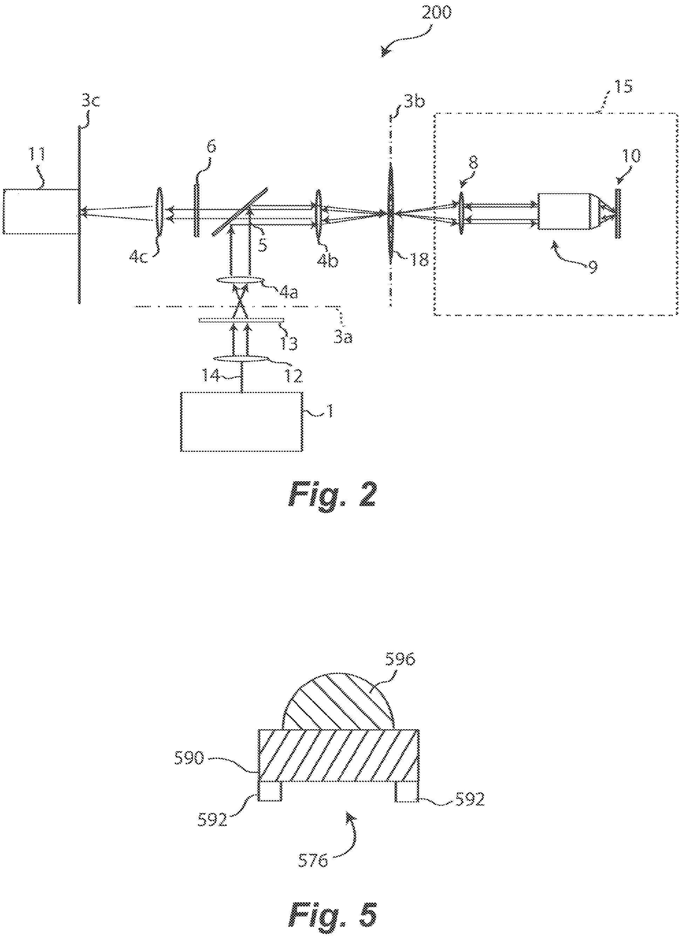

Figure 2 schematically shows a second embodiment of the confocal microscopy apparatus according to the invention, generally indicated with the reference numeral 200. The apparatus 200 of Figure 2 differs from the apparatus 100 of Figure 1 in that, instead of the structured light generating substrate 2, an array 13 of structured light generating microlenses, comprising a substrate provided with microlenses on a face (advantageously on the face configured to transmit the structured light beam that is directed towards the first relay lens 4a), is present. In such case, the optical unit 12 make the light collected by the optical fibre 14 (i.e. the basic light beam) pass through the array 13 of structured light generating microlenses, provided with two sectors having microlenses with different geometrical features, so as to obtain a structured light beam that is focused on a focal plane 3a slightly spaced from the plane on which the microlens array 13 lies. Therefore, in the apparatus 200 of Figure 2, the microlens array 13, that is made of an optically transparent material, optionally glass, operates as structured light generating component. In this case, the first relay lens 4a, the second relay lens 4b and the third relay lens 4c form a set of relay lenses that optically conjugates the optical plane, i.e. the focal plane 3a, of the microlens array 13 (i.e. the plane on which the structured light beam is focused), the plane on which the spinning disk 7 (plane 3b) lies, and the plane of the sample 10 that is acquired to the plane 3c on which the acquisition sensor 11 lies.

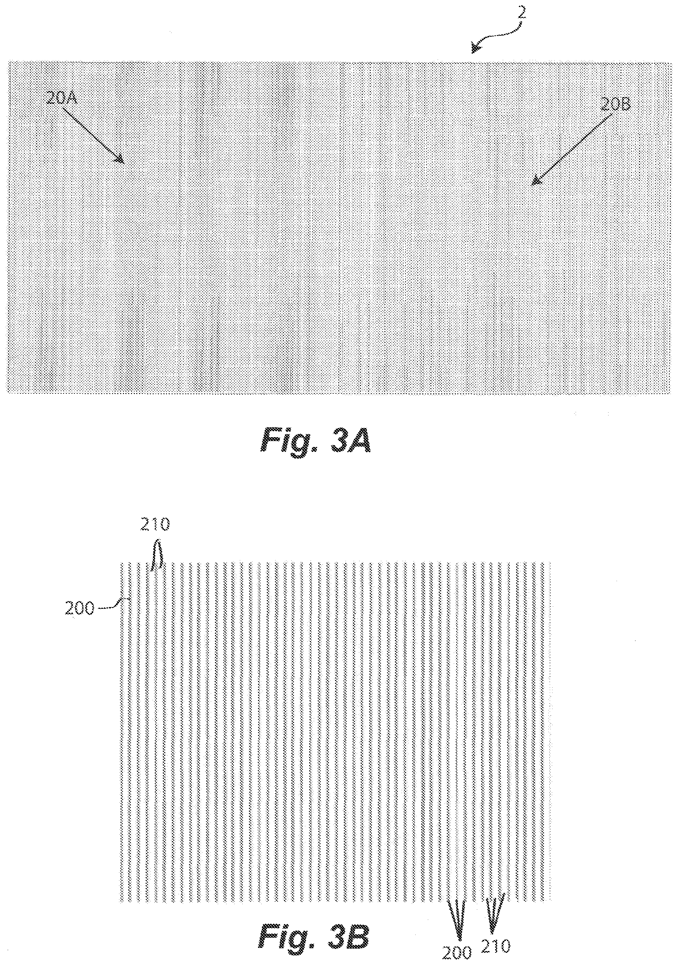

Figure 3A shows a plan view of the structured light generating substrate 2 of the apparatus 100 of Figure 1 comprising a first sector 20A and a second sector 20B having masks with similar geometrical patterns. In this regard, Figure 3B shows an enlarged particular of the first sector 20A, wherein it can be seen that the substrate 2 has a coating 210 opaque to light, optionally made of chromium-based material (i.e., materials based on chromium oxide (Cr₂O₃) or based on a mixture of Cr₂O₃ and other species as chromium (Cr) and silicon dioxide (SiO₂)), on which parallel linear apertures 200, having same width (optionally ranging from 10 micrometers - µm -to 30 micrometers) and a constant mutual distance (optionally ranging from 50 micrometers to 300 micrometers), through which light can pass, are made by photolithography. Generally, the sizes of the width and/or distance between the parallel linear apertures of one of the two sectors are different from those of the other sector; for instance, in the structured light generating substrate 2 of Figure 3A, the sizes of the width and distance between the parallel linear apertures 200 of the first sector 20A are greater than the sizes of the width and distance between the parallel linear apertures, respectively, of the second sector 20B. Moreover, in other embodiments of the apparatus according to the invention, the structured light generating substrate 2 may comprise a number of sectors different from two, for instance one, or four, or a number of sectors equal to a power of 2; each sector has respective geometrical features of the pattern, and the limit on the area of the single sector is given by the desired area of the acquired image. Obviously, the number of sectors and the geometrical features of the related patterns affect the mode of image acquisition, that is the scan (the necessary shifts) of the substrate 2 on the plane orthogonal to the optical axis.

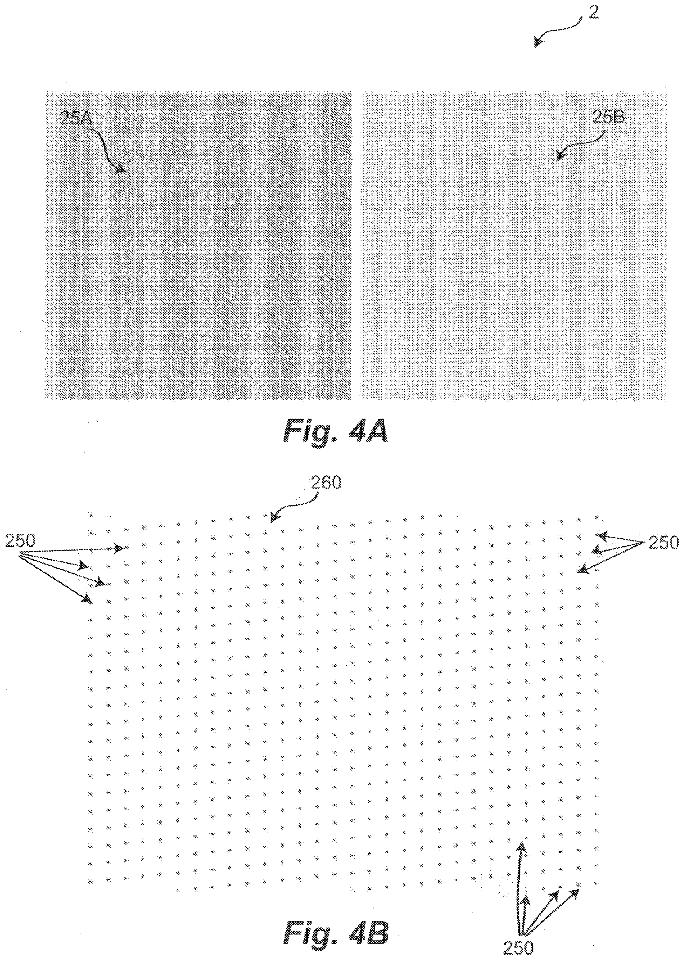

Figure 4A shows a top plan view of an alternative version of the structured light generating substrate 2 of the apparatus 100 of Figure 1 comprising a first sector 25A and a second sector 25B having masks with similar geometrical patterns. In this regard, Figure 4B shows an enlarged particular of the first sector 25A, wherein it can be seen that the substrate 2 has a coating 260 opaque to light, optionally made of chromium-based material (i.e., materials based on chromium oxide (Cr₂O₃) or based on a mixture of Cr₂O₃ and other species as chromium (Cr) and silicon dioxide (SiO₂)), on which a plurality of circular holes 250, through which light can pass, are made by photolithography. In particular, the plurality of circular holes 250 (the diameter of which is optionally ranging from 10 micrometers to 30 micrometers) is arranged according to a matrix pattern, wherein the circular holes are optionally disposed at the vertices of contiguous equal parallelograms, more optionally rhombuses, still more optionally square ones, whereby each circular hole 250 is spaced from the closest four circular holes 250 by the same distance (optionally ranging from 50 micrometers to 300 micrometers). Generally, the diameter of each circular hole and/or its distance from the closest four circular holes in one of the two sectors are different from the diameter of each circular hole and from its distance from the closest four circular holes, respectively, in the other sector; for instance, in the structured light generating substrate 2 of Figure 4A, the diameter of each circular hole 250 and its distance from the closest four circular holes 250 of the first sector 25A are greater than the diameter of each circular hole and its distance from the closest four circular holes, respectively, of the second sector 25B. Also in this case, the structured light generating substrate 2 may comprise a number of sectors, each provided with a respective plurality of circular holes arranged according to a matrix pattern, different from two, for instance one, or four, or a number of sectors equal to a power of 2; each sector has respective geometrical features of the pattern, and the limit on the area of the single sector is given by the desired area of the acquired image. Obviously, the number of sectors and the geometrical features of the related patterns affects the mode of image acquisition, that is the scan (the necessary shifts) of the substrate 2 on the plane orthogonal to the optical axis.

Similarly to the geometrical patterns shown in Figures 3A, 3B, 4A and 4B for the structured light generating substrates 2 of the apparatus 100 of Figure 1, the microlens array 13 of Figure 2 may be provided, on its face directed towards the first relay lens 4a (i.e. on the planar face focusing the structured light beam on the focal plane 3a shown in Figure 2), with generally cylindrical (linear) microlenses so as to make a geometrical pattern similar to that of Figures 3A and 3B, where such generally cylindrical microlenses replace the parallel linear apertures, or with generally hemispherical microlenses so as to make a geometrical pattern similar to that of Figures 4A and 4B, where such generally hemispherical microlenses replace the circular holes. By this configuration, the structured light beam is focused on the focal plane 3a of Figure 2 according to parallel lines similar to the geometrical pattern of Figures 3A and 3B or according to circular spots similar to the geometrical pattern of Figures 4A and 4B. In this case, the substrate of the array 13 may have, on the planar face opposite to the one directed towards the first relay lens 4a (i.e. on the planar face receiving the basic light beam), a coating opaque to light, optionally made of chromium-based material, subject to photolithography according to a geometrical pattern such that the coating is missing in correspondence with the microlenses, whereby such coating opaque to light is similar to the coating 210 of Figures 3A and 3B when the microlenses are generally cylindrical microlenses, or similar to the coating 260 of Figures 4A and 4B when the microlenses are generally hemispherical microlenses; however, it must be noted that such coating of the substrate of the array 13 is not an essential feature and may be also not present.

Figure 5 shows a cross-section view of a portion of the array 13 of microlenses of Figure 2 in correspondence of a generally cylindrical microlens 596; however, it must be noted that, also when the array 13 of microlenses of Figure 2 is provided with generally hemispherical microlenses, the cross-section view in correspondence of a microlens is similar (if not exactly equal) to the one shown in Figure 5.

As stated, the array 13 of microlenses includes a substrate 590 having, on the planar face opposite to the one directed towards the first relay lens 4a (i.e. on the planar face receiving the basic light beam), a coating 592 subject to photolithography opaque to light, that is not present in correspondence with the generally cylindrical microlenses, one of which, indicated with the reference numeral 596, is shown in Figure 5, with which the face of the substrate 590 directed towards the first relay lens 4a (i.e. the planar face focusing the structured light beam on the focal plane 3a shown in Figure 2) is provided. In other words, the generally cylindrical microlenses 596 are disposed such that each generally cylindrical microlens 596 is optically aligned with a corresponding continuous linear aperture 576 made in the coating 592 subject to photolithography opaque to light (as well as the generally hemispherical microlenses are disposed such that each generally hemispherical microlens is optically aligned with a corresponding circular aperture made in the coating subject to photolithography opaque to light). By this configuration, each generally cylindrical microlens 596 is positioned directly across the thickness of the array 13 in correspondence of a continuous linear aperture 576 of the coating 592. Hence, any light transmitted through a given continuous linear aperture 576 of the coating 592 passes through a corresponding generally cylindrical microlens 596, that focuses the same on the focal plane 3a shown in Figure 2.

As shown in Figure 5, each generally cylindrical microlens 596 (as well as each generally hemispherical microlens) of the array 13 has a generally semi-circular cross-section. In the present context, the term "generally semi-circular" is taken to mean that the curvature of the outer surface of the generally cylindrical microlens 596 (as well as of a generally hemispherical microlens) of the array 13 needs not in all embodiments of the apparatus according to the invention to exactly correspond to the curve of a circle. Instead, the curvature of the generally cylindrical microlens 596 (as well as of a generally hemispherical microlens) may have an eccentricity different from an exact circle. As non-limiting examples, the curvature of the generally cylindrical microlens 596 (as well as of a generally hemispherical microlens) may be elliptical, parabolic, hyperbolic or even aspherical (i.e. corresponding to a conical surface with variable curvature radii). For convenience, the term "generally semi-circular" encompasses all such embodiments. The microlenses of the array 13 may be composed of the same material as the substrate 590, and may be integrally formed on the same substrate 590, for instance during the same fabrication step. For example, they may be formed by a molding or etching process.

It must be noted that other embodiments of the confocal microscopy apparatus according to the invention may comprise other structured light generating components different from the substrate 2 of Figure 1 and from the array 13 of microlenses of Figure 2, such as for instance a digital micromirror device (DMD - Digital Micromirror Device), still remaining within the scope of protection of the invention.

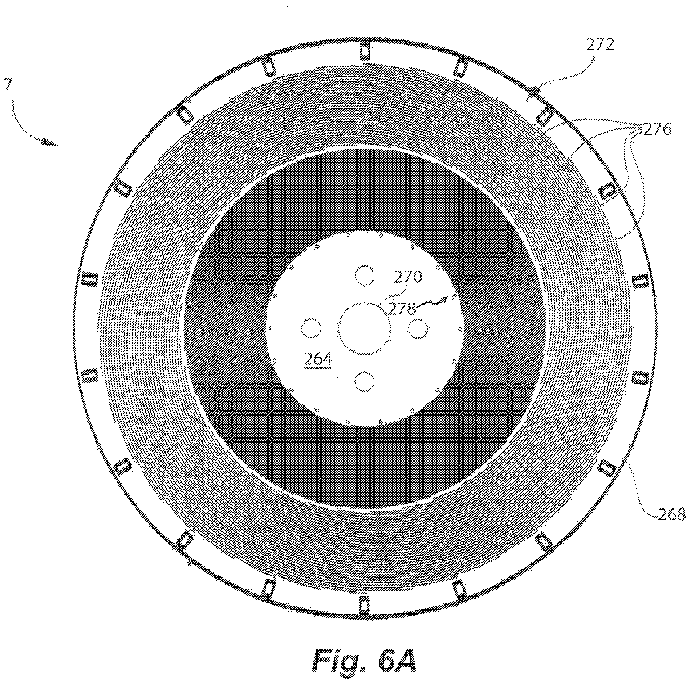

Figure 6A is a top plan view of an example of a spinning disk 7 according to some embodiments. The spinning disk 7 generally includes a central section 264 and an outer section 268 coaxially surrounding the central section 264. The central section 264 may be configured (e.g., as a hub) for attaching the spinning disk 7 to a shaft to enable motorized rotation of the spinning disk 7. The shaft may be attached to one side of the central section 264 and/or may pass through a central bore 270 of the spinning disk 7. The outer section 268 comprises an outer continuous slit annulus 272 and an inner continuous slit annulus 278 which also coaxially surround the central section 264. Relative to the central axis of the spinning disk 7, each one of the outer and inner annulii 272 and 278 has an inner radius and an outer radius, and spans a radial distance from the inner radius to the outer radius, whereby the outer radius of the inner annulus 278 is lower than the inner radius of the outer annulus 272; optionally, the radial distance of the inner annulus 278 is equal to the radial distance of the outer annulus 272. The outer and inner continuous slit annulii 272 and 278 may be, or be formed by, respective patterned masks as described further below. Each one of the outer and inner continuous slit annulii 272 and 278 includes a plurality of apertures 276 arranged along a plurality of spiral paths on the planar face of the spinning disk 7. In the illustrated example, the outer annulus 272 includes thirty-six spiral paths, while the inner annulus 278 includes twenty-four spiral paths; however, it must be noted that the number of the spiral paths is not an essential feature for the invention, and other variants of the spinning disk may include less or more than thirty-six and twenty-four spiral paths for continuous slit annulii. The spiral paths may be arranged adjacent to each other in a multi-start pattern, such that the spiral paths each start at a first radius of the spinning disk 7 (e.g., the inner radius of the outer annulus 272 and the inner radius of the inner annulus 278) and end at a second radius of the spinning disk 7 greater than the first radius (e.g., the outer radius of the outer annulus 272 and the outer radius of the inner annulus 278). In some embodiments of the apparatus according to the invention, the spiral paths may follow (or substantially follow) Archimedean spirals that may be expressed by *r* = *a* + *b*(*ϑ*), where the radius r and angle ϑ are polar coordinates and the parameters *a* and *b* are real numbers. In other embodiments of the apparatus according to the invention, the spiral paths may be non-Archimedean. Moreover, in other embodiments of the apparatus according to the invention, the spinning disk 7 may include a number of continuous slit annulii different from two, for instance one or four or a different power of 2. Obviously, the number of sectors and the geometrical features of the related patterns affect the mode of image acquisition, that is the scan (the necessary shifts) of the spinning disk 7 on the plane orthogonal to the optical axis. In other embodiments of the apparatus according to the invention, each aperture 276 of the spinning disk 7 is a continuous spiral slit extending along a corresponding spiral path from the start to the end of that spiral path.

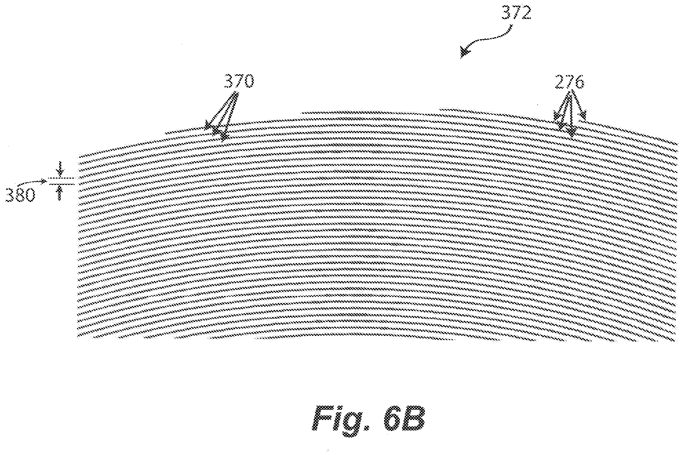

Figure 6B shows an enlarged particular 372 of the outer continuous slit annulus 272 of the spinning disk 7 of Figure 6A. The apertures 276 are continuous spiral slits. Adjacent apertures 276 are spaced from each other by a separation distance (or "step" or "pitch") indicated as 380 in Figure 6B. Optionally, the separation distance 380 ranges from 100 micrometers to 2 millimeters, more optionally from 100 micrometers to 1 millimeter. In some embodiments of the apparatus according to the invention, the separation distance 380 is constant over the entire extent of the spiral paths taken by the apertures 276, while in other embodiments the separation distance 380 may vary. In some embodiments of the apparatus according to the invention, the width of each spiral aperture 276 (the distance between opposing spiral edges of the aperture 276, i.e., the dimension transverse to the aperture 276) is of the order of micrometers, optionally ranging from 10 micrometers to 100 micrometers, more optionally from 20 micrometers to 70 micrometers. Generally, the separation distance and/or the dimensions of the width of the continuous spiral apertures of one of the two outer and inner annulii 272 and 278 are different from those of the other annulus; for instance, in the spinning disk 7 of Figure 6A, the separation distance 380 and the width of the continuous spiral apertures 276 of the outer annulus 272 are greater than those of the inner annulus 278. In some embodiments of the apparatus according to the invention, the width of the continuous spiral apertures is constant over the entire extent of the aperture, while in other embodiments the width may vary. The spinning disk 7 may include a number of annulii, each provided with respective continuous spiral slit apertures, different from two, for instance one, or four, or a number of sectors equal to a power of 2; each annulus has respective geometrical features of the continuous spiral slit apertures, in function of the desired area of the acquired image. Obviously, the number of annulii and the geometrical features of the related patterns affect the mode of image acquisition, that is the scan (the necessary shifts) of the spinning disk 7 on the plane orthogonal to the optical axis.

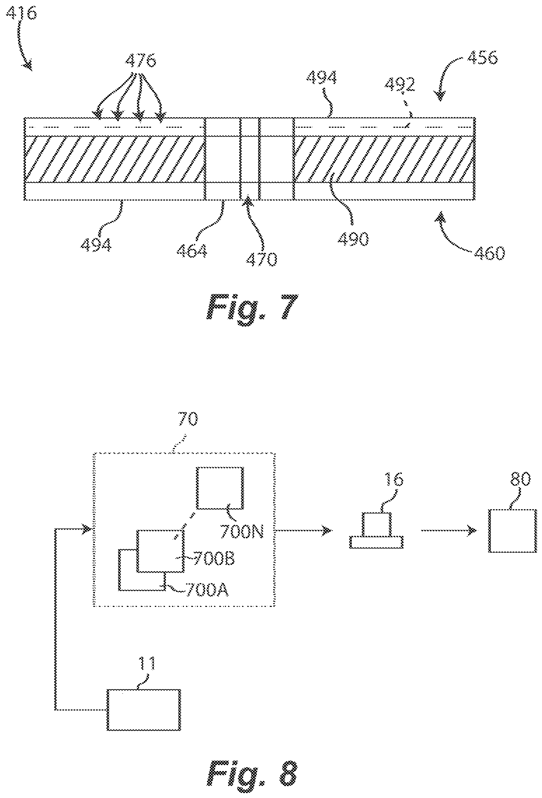

Figure 7 is a schematic cross-sectional view of a spinning disk 416 according to some other embodiments of the apparatus according to the invention. The spinning disk 416 may include a planar first side 456, an opposing planar second side 460, and a central bore 470. The thickness of the spinning disk 416 is defined between the first side 456 and the second side 460. The spinning disk 416 may further include a disk-shaped substrate 490 largely dictating the overall dimensions of the spinning disk 416, and a patterned mask 492. The substrate 490 includes a planar first surface and an opposing planar second surface corresponding to the first side 456 and the second side 460, respectively. The thickness of the substrate 490 extends from the first surface to the second surface along a direction orthogonal to the first surface and second surface. In some embodiments, the thickness of the substrate 490 is in a range from 0,5 mm to 2 mm. The substrate 490 may be composed of any optically transparent material suitable for use in a confocal microscope. Examples of materials for the substrate 490 include, but are not limited to, various glasses and quartz (including fused quartz), as well as certain optically transparent polymers. One non-limiting example of glass is borosilicate glass, such as BOROFLOAT® glasses available from SCHOTT North America, Inc., Louisville, Kentucky, USA. In some embodiments, the substrate 490 may include a central section 464 that is distinct from the substrate 490 and may be composed of a different material. The patterned mask 492 includes a spiral pattern or arrangement of apertures 476 as described for the spinning disk 7 shown in Figures 6A and 6B. The patterned mask 492 is disposed on either the first surface or the second surface of the substrate 490.

Generally, it is desirable to minimize reflectance of light incident on the surface of the patterned mask 492 so as to minimize the amount of "ghost" light that contributes to background noise in the confocal images captured by the acquisition sensor 11 (Figures 1 and 2). In some embodiments, the patterned mask 492 may be composed of a suitable optically black (low-reflective) material. Examples of black materials include, but are not limited to, chrome-based materials, i.e., materials based on chromium oxide (Cr₂O₃) or based on a mixture of Cr₂O₃ and other species such as chromium (Cr) and silicon dioxide (SiO₂), a few examples being black chrome and blue chrome. Other inorganic compounds or alloys which are suitably black may also be utilized. In some embodiments, the patterned mask 492 may be composed of a material that may be characterized as being a highly optically black (or, more simply, "highly black") material. As one example, a highly black material may have a hemispherical reflectance of less than 5% for the wavelength spectrum contemplated by the present disclosure (e.g., from about 350 to 750 nm). As another example, a highly black material may have a hemispherical reflectance of less than 2% for the wavelength spectrum. Examples of the latter material include, but are not limited to, the VACUUM BLACK™ and MAGIC BLACK™ microstructured coatings commercially available from Acktar Ltd., Kiryat-Gat, Israel. In some embodiments, the highly black material of the patterned mask 492 may be a microstructured material or a material with a microstructured outer surface or coating. For example, the microstructured material may have a dendritic finish such as a coating comprising closely spaced black peaks and/or ridges. In one specific yet non-limiting example, the microstructured feature of the dendritic finish may consist of vertically-oriented, single-walled or multi-walled carbon nanotubes (CNTs).

In the present context, the term "hemispherical reflectance" or "total hemispherical reflectance" is the reflectance measured of all light that is scattered off of a test sample at all angles. This reflectance measurement may be performed according to known techniques. For example, hemispherical reflectance may be measured using an integrating sphere, in which an incoming light beam illuminates a test sample attached onto the sphere from a given direction and the radiation scattered by the sample is collected and detected, as disclosed by Quijada et al., Hemispherical Reflectance and Emittance Properties of Carbon Nanotubes Coatings at Infrared Wavelengths, CRYOGENIC OPTICAL SYSTEMS AND INSTRUMENTS XIII, Conference on Cryogenic Optical Systems and Instruments XIII, Vol. 8150, DOI: 10.1117/12.894601, p. 11 (2011).

In some embodiments of the apparatus according to the invention, the patterned mask 492 is a thin layer (or film, coating, etc.) having a thickness of the order of micrometers. For example, patterned mask 492 may have a thickness in a range from 0,1 micrometers to 0,3 micrometers. The patterned mask 492 may be fabricated by any technique suitable for its composition and thickness. For example, the patterned mask 492 may be prefabricated and then laminated on the substrate 490. As other examples, the patterned mask 492 may be formed on the substrate 490 by a microfabrication process such as, for example, electroplating, vacuum deposition (chemical vapor deposition or CVD, physical vapor deposition or PVD, etc.), evaporation, or by a wet coating technique (e.g., spray coating, dip coating, spin-on coating, etc.). In some embodiments, the patterned mask 492 may be formed by first depositing a continuous layer and thereafter patterning the layer to form the apertures 476 by any suitable technique such as photolithography (e.g., masking and etching).

In some embodiments of the apparatus according to the invention, to further lower the reflectivity of the spinning disk 416, the spinning disk 416 may include an anti-reflective layer or coating 494 that conformally coats (covers) the first side 456 and the second side 460. The anti-reflective layer 494 may be any material or multilayer stack of materials exhibiting effective anti-reflective characteristics for the spectrum of wavelengths contemplated by the present disclosure (e.g., from 350 nm to 700 nm, or about 350 nm to about 700 nm). Examples of materials suitable for use as anti-reflective layers include, but are not limited to, certain metal fluorides, metal oxides, and metalloid oxides, such as magnesium fluoride (MgF₂),
lithium fluoride (LiF), calcium fluoride (CaF₂), sodium fluoride (NaF), silicon dioxide (SiO₂), yttrium oxide (Y₂O₃), and hafnium oxide (HfO₂), as well as combinations of two or more of the foregoing in alternating or periodic layers. In some embodiments of the apparatus according to the invention, the anti-reflective layer 494 is a high-performance anti-reflective layer. One non-limiting example of a high-performance anti-reflective layer is a material having an average reflectance (Rav) of less than or equal to 0,3% (Rav ≤ 0,3%) over a wavelength range of 380 nm to 710 nm, and a maximum reflectance (Rmx) of less than or equal to 1% (Rmx ≤ 1%) over the wavelength range of 380 nm to 710 nm. The high-performance anti-reflective layer may comprise one of (or a combination of two or more of) the fluoride materials and/or oxide materials noted above.

Typically, the anti-reflective layer 494 is a thin layer (of the order of micrometers) applied by a vacuum deposition process. In some embodiments, the anti-reflective layer 494 may be formed by applying the anti-reflective material to the substrate 490, followed by forming the patterned mask 492, followed by again applying the anti-reflective material so as to conformally coat the patterned mask 492. As a result, the patterned mask 492 is embedded in the anti-reflective coating 494, as illustrated in Figure 7. In other embodiments, the patterned mask 492 may first be formed directly on the substrate 490, followed by applying the anti-reflective coating 494 so as to conformally cover the patterned mask 492 and exposed surfaces of the substrate 490.

It will be understood that in the fabrication methods of the spinning disk described herein, prior to forming any layer on an underlying surface, additional steps may be taken as needed to prepare the underlying surface such as, for example, cleaning, etching, planarizing (e.g., lapping or polishing), dehydration, surface functionalization (e.g., adhesion promotion, passivation, etc.), etc. Such additional steps may or may not result in the formation of an additional, identifiable thin film on the underlying surface. Such additional thin films, if present in practice, are not specifically shown in the drawing figures.

The above-described approaches taken to reduce reflectance from the spinning disk 416 reduce the "ghost" light captured by the acquisition sensor 11 (Figures 1 and 2). This enables an increase of the signal-to-noise ratio (where the noise is the background noise) for a given exposure time, or a reduction in the exposure time required to attain a desired signal-to-noise ratio (where the noise is the background noise). Reducing the background noise improves image contrast and improves assay results. Reducing the exposure time reduces the image acquisition time and thus increases the throughput of the confocal microscopy apparatus according to the invention.

Making reference to Figure 8, it may be observed that the processing portion of the apparatus of Figure 1 comprises a processing central unit 16 receiving from the acquisition sensor 11 the set of the acquired N sub-frames 700A, 700B, ..., 700N of the plane of the sample 10; during acquisition, each sub-frame is advantageously stored in a memory 70, and the structured light generating component and the spinning disk 7 are moved to illuminate with the structured light beam another portion of the plane of the sample 10 thus acquiring the next sub-frame. The acquisition of next sub-frames continues up to the coverage of the entire plane of the sample 10, and then the sub-frames are combined into a super-resolved final image 80 of the plane under examination thanks to the processing performed by the central unit 16 by using structured light microscopy deconvolution algorithms, such as for instance those disclosed in document WO2013144891 or those disclosed by R. Heintzmann in Structured illumination methods, in Handbook of Biological Confocal microscopy, chapter 13, J.B. Pawley editor, New York, 2006. Advantageously, the central unit 16 comprises one or more graphics processors or GPUs (Graphics Processing Unit), optionally a CUDA (Compute Unified Device Architecture) unit available from the US company Nvidia Corporation, so as to exploit the parallel computing, one or more volatile and non-volatile memories for storing data, one or more data input devices (e.g. keyboard, touch screen, mouse), one or more user/processor interface devices (e.g. monitor). However, the presence of parallel computing processors, in particular GPUs, is not essential for the invention; in fact, other embodiments of the apparatus according to the invention may have the acquisition portion of Figure 1 or of Figure 2, and then a processing portion performing an offline (not in real time) processing, i.e. without any specific requirement of computing speed, on the stored acquisitions.

The central unit 16 also controls the operation of all the components of the confocal microscopy apparatus 100 according to the invention, in particular the automated moving units (e.g. motorised devices) allowing the structured light generating component (i.e., the substrate 2 or the microlens array 13) to be moved with movements in the plane perpendicular to the optical axis, in order to acquire an image of an entire plane of the sample 10. The central unit 16 also controls the automated units for moving the spinning disk 7 that is rotated.

It must be noted that the acquisition portion of the confocal microscopy apparatus, as the one shown in Figures 1 and 2 for the first and second embodiments of the invention may be fabricated and marketed independently from the processing portion; also, the acquisition portion of the confocal microscopy apparatus may be fabricated and marketed independently from the presence of the light source (indicated with the reference numeral 1 in Figures 1 and 2), that could be mounted afterwards in correspondence of a related housing configured to house a light source, and/or of the acquisition sensor (indicated with the reference numeral 11 in Figures 1 and 2), that could be mounted afterwards in correspondence of a related housing configured to house an acquisition sensor. In this case, the acquisition portion could be also provided with an electronic unit for controlling the operation of the components of the same acquisition portion, in particular the automated moving units (e.g. motorised devices) allowing the structured light generating component (i.e., the substrate 2 or the microlens array 13) to be moved with movements in the plane perpendicular to the optical axis, and the automated units for moving the spinning disk 7 that is rotated; such controlling electronic unit is configured to be connected with an external central unit processing the images acquired by the acquisition sensor, possibly an acquisition sensor external to the acquisition portion.

The acquisition of the set of sub-frames of the entire plane of the sample occurs by rotating the spinning disk 7 in the excitation and emission optical path, while the structured light generating component (i.e. the substrate 2 or the microlens array 13) is arranged in the excitation optical path and moved in the plane perpendicular to the optical axis, while the focal plane 3a of the structured light beam, the focal plane 3b of the excitation beam, and the plane of which the images of the sample 10 are to be acquired are optically conjugated to the focal plane of the acquisition sensor 11.

The preferred embodiments of this invention have been described and a number of variations have been suggested hereinbefore, but it should be understood that those skilled in the art can make other variations and changes without so departing from the scope of protection thereof, as defined by the attached claims.

## Claims

1. Confocal microscopy apparatus (100; 200), comprising:
- a structured light generating component (2; 13) configured to be illuminated with a basic light beam and to generate a structured light beam focused on a first plane (3a);
- a spinning disk (7) configured to receive said structured light beam and to transmit a resulting excitation beam to an optics (8, 9) of a microscope (15) focused on a plane of a sample (10), wherein the spinning disk (7) lies on a second plane (3b) and comprises a disk-shaped substrate (490) composed of an optically transparent material, the substrate (490) of the spinning disk (7) comprising a planar first surface (456) and an opposing planar second surface (460) and a patterned mask (492) disposed on one of the first surface (456) and the second surface (460) and comprising at least one sector provided with one or more continuous spiral slit apertures (476), wherein the patterned mask (492) or an outer surface thereof is composed of a highly black material opaque to light;
- a housing configured to house on a third plane (3c) an acquisition sensor (11) configured to detect a fluorescent beam emitted from said plane of the sample (10);
- a set of relay lenses (4a, 4b, 4c) configured to optically conjugate the first plane (3a), the second plane (3b) and said plane of the sample (10) to the third plane (3c);
- optical means (5, 6) configured to transmit said structured light beam from the structured light generating component (2; 13) to said plane of the sample (10) and said emitted fluorescent beam from said plane of the sample (10) to said housing configured to house the acquisition sensor (11); and
- moving means configured to move the structured light generating component (2; 13), so as to shift the structured light beam in the first plane (3a), and the spinning disk (7) in the second plane (3b).

2. Apparatus (100) according to claim 1, wherein the structured light generating component comprises a structured light generating substrate (2) provided with at least one sector (20A, 20B; 25A, 25B) having a mask (210; 260) of material opaque to light according to a geometrical pattern provided with a plurality of apertures (200; 250) of optically transparent material configured to make said basic light beam pass so as to obtain a structured light beam, whereby the first plane (3a) is the plane on which the structured light generating substrate (2) lies.

3. Apparatus (100) according to claim 2, wherein the structured light generating substrate (2) is made of the optically transparent material, optionally glass, having a coating (210) opaque to light, optionally made of chromium-based material, provided with said apertures (200; 250), optionally made by photolithography.

4. Apparatus (100) according to claim 2 or 3, where said apertures are selected from the group comprising:
- parallel linear apertures (200), having width optionally ranging from 10 micrometers to 30 micrometers and a mutual distance optionally ranging from 50 micrometers to 300 micrometers, and
- circular holes (250), having diameter optionally ranging from 10 micrometers to 30 micrometers, arranged according to a matrix pattern, wherein the circular holes (250) are optionally disposed at the vertices of contiguous equal parallelograms, more optionally rhombuses, still more optionally square ones, whereby each circular hole (250) is spaced from the closest four circular holes (250) by an equal distance optionally ranging from 50 micrometers to 300 micrometers.

5. Apparatus (200) according to claim 1, wherein the structured light generating component comprises an array (13) of structured light generating microlenses (596), comprising a substrate (590) provided on a face with a plurality of microlenses (596) configured to generate said structured light beam focused on a focal plane (3a).

6. Apparatus (200) according to claim 5, wherein said microlenses (596) are selected from the group comprising:
- generally cylindrical linear microlenses configured to focus the structured light beam on the focal plane (3a) according to parallel lines, wherein said parallel lines have width optionally ranging from 10 micrometers to 30 micrometers and a mutual distance optionally ranging from 50 micrometers to 300 micrometers, and
- generally semicircular microlenses configured to focus the structured light beam on the focal plane (3a) according to circular spots disposed according to a matrix pattern, wherein said circular spots have diameter optionally ranging from 10 micrometers to 30 micrometers, and are optionally disposed at the vertices of contiguous equal parallelograms, more optionally rhombuses, still more optionally square ones, whereby each circular spot is spaced from the closest four circular spots (250) by an equal distance optionally ranging from 50 micrometers to 300 micrometers.

7. Apparatus (200) according to claim 5 or 6, wherein the substrate (590) of the array (13) of microlenses (596) is provided with a coating (592) opaque to light, optionally made of chromium-based material, subject to photolithography according to a geometrical pattern such that the coating (592) is missing in correspondence with the microlenses (596), whereby each microlens (596) is optically aligned with a corresponding aperture (576) made in the coating (592).

8. Apparatus (100) according to claim 1, wherein the structured light generating component comprises a digital micromirror device.

9. Apparatus (100; 200) according to any one of the preceding claims, wherein said set of relay lenses comprises a first relay lens (4a), a second relay lens (4b) and a third relay lens (4c), and said optical means (5; 6) comprises a dichroic filter (5), wherein the first relay lens (4a) is configured to be crossed by said structured light beam, the dichroic filter (5) is configured to reflect said structured light beam coming from the first relay lens (4a) towards the second relay lens (4b) that is configured to focus said structured light beam on the spinning disk (7), the dichroic filter (5) being further configured to let said emitted fluorescent beam coming from the spinning disk (7) pass towards said housing configured to house the acquisition sensor (11).

10. Apparatus (100; 200) according to claim 9, wherein said optical means (5; 6) further comprises an emission filter (6) interposed between the dichroic filter (5) and said housing configured to house the acquisition sensor (11), the emission filter (6) being configured to selectively let said emitted fluorescent beam coming from the dichroic filter (5) pass towards said housing configured to house the acquisition sensor (11).

11. Apparatus (100; 200) according to claim 10, wherein the emission filter (6) comprises two or more portions each one of which is configured to be crossed only by a respective portion of said emitted fluorescent beam having a corresponding wavelength range.

12. Apparatus (100; 200) according to claim 11, wherein the emission filter (6) is mounted on a wavelength selector, wherein said wavelength selector optionally comprises a motorised wheel and/or at least one piezoelectric device and/or at least one motorised device.

13. Apparatus (100; 200) according to any one of the preceding claims, also comprising:
- a light source (1) configured to emit said basic light beam;
- an acquisition sensor (11) housed in said housing and configured to detect a fluorescent beam emitted from said plane of the sample (10); and
- a processing central unit (16) configured to receive from the acquisition sensor (11) a plurality of partial acquisitions (700A, 700B, ..., 700N) of said plane of the sample (10) and to combine such plurality of partial acquisitions (700A, 700B, ..., 700N) into a final image (80) of said plane of the sample (10) by processing with structured light microscopy deconvolution algorithms.

14. Apparatus (100; 200) according to claim 13, wherein the processing central unit (16) comprises one or more graphics processors or GPUs.

15. Process for acquiring and processing images in structured light confocal microscopy, comprising the following steps:
A. making a spinning disk (7) be crossed by a structured light beam obtaining a resulting excitation light beam, wherein the spinning disk (7) comprises a disk-shaped substrate (490) composed of an optically transparent material, the substrate (490) of the spinning disk (7) comprising a planar first surface (456) and an opposing planar second surface (460) and a patterned mask (492) disposed on one of the first surface (456) and the second surface (460) and comprising at least one sector provided with one or more continuous spiral slit apertures (476), wherein the patterned mask (492) or an outer surface thereof is composed of a highly black material opaque to light;
B. focusing the resulting excitation beam on a plane of a sample (10);
C. acquiring a plurality of partial acquisitions (700A, 700B, ..., 700N) of said plane of the sample (10); and
D. combining such plurality of partial acquisitions (700A, 700B, ..., 700N) into a final image (80) of said plane of the sample (10) by processing with structured light microscopy deconvolution algorithms.

## Patentansprüche

1. Konfokalmikroskopiegerät (100; 200), das Folgendes umfasst:
- eine strukturierte lichterzeugende Komponente (2; 13), die so konfiguriert ist, dass sie mit einem Basis-Lichtstrahl beleuchtet wird und einen auf eine erste Ebene (3a) fokussierten strukturierten Lichtstrahl erzeugt;
- eine sich drehende Scheibe (7), die so konfiguriert ist, dass sie den strukturierten Lichtstrahl empfängt und einen resultierenden Anregungsstrahl zu einer Optik (8, 9) eines Mikroskops (15) überträgt, die auf eine Ebene einer Probe (10) fokussiert ist, wobei die sich drehende Scheibe (7) auf einer zweiten Ebene (3b) liegt und ein scheibenförmiges Substrat (490) aus einem optisch transparenten Material umfasst, wobei das Substrat (490) der sich drehenden Scheibe (7) eine ebene erste Oberfläche (456) und eine gegenüberliegende ebene zweite Oberfläche (460) und eine strukturierte Maske (492) umfasst, die auf einer von der ersten Oberfläche (456) und der zweiten Oberfläche (460) angeordnet ist und mindestens einen Sektor umfasst, der mit einer oder mehreren kontinuierlichen spiralförmigen Schlitzöffnungen (476) versehen ist, wobei die strukturierte Maske (492) oder eine äußere Oberfläche davon aus einem hochschwarzen, für Licht undurchsichtigen Material besteht;
- ein Gehäuse, das dazu ausgelegt ist, auf einer dritten Ebene (3c) einen Erfassungssensor (11) aufzunehmen, der dazu ausgelegt ist, einen von der Ebene der Probe (10) emittierten Fluoreszenzstrahl zu erfassen;
- einen Satz von Zwischenlinsen (relay lens) (4a, 4b, 4c), die so konfiguriert sind, dass sie die erste Ebene (3a), die zweite Ebene (3b) und die Ebene der Probe (10) optisch mit der dritten Ebene (3c) konjugieren;
- optische Mittel (5, 6), die so konfiguriert sind, dass sie den strukturierten Lichtstrahl von der strukturierten lichterzeugenden Komponente (2; 13) zu der Ebene der Probe (10) und den emittierten Fluoreszenzstrahl von der Ebene der Probe (10) zu dem Gehäuse übertragen, das zur Aufnahme des Erfassungssensors (11) konfiguriert ist; und
- Bewegungsmittel, die so konfiguriert sind, dass sie die strukturierte lichterzeugende Komponente (2; 13) so bewegen, dass der strukturierte Lichtstrahl in der ersten Ebene (3a) verschoben wird, und die rotierende Scheibe (7) in der zweiten Ebene (3b) bewegen.

2. Vorrichtung (100) nach Anspruch 1, wobei die strukturierte lichterzeugende Komponente ein strukturiertes Lichterzeugungs-Substrat (2) umfasst, das mit mindestens einem Sektor (20A, 20B; 25A, 25B) versehen ist, der eine Maske (210; 260) aus einem lichtundurchlässigen Material gemäß einem geometrischen Muster aufweist, das mit einer Vielzahl von Öffnungen (200; 250) aus optisch transparentem Material versehen ist, die so konfiguriert sind, dass sie den BasisLichtstrahl durchlassen, um einen strukturierten Lichtstrahl zu erhalten, wobei die erste Ebene (3a) die Ebene ist, auf der das strukturierte lichterzeugende Substrat (2) liegt.

3. Vorrichtung (100) nach Anspruch 2, wobei das strukturierte Lichterzeugungs-Substrat (2) aus dem optisch transparenten Material, optional aus Glas, hergestellt ist, das eine lichtundurchlässige Beschichtung (210) aufweist, die optional aus einem Material auf Chrombasis hergestellt ist und mit den Öffnungen (200; 250) versehen ist, die optional durch Photolithographie hergestellt sind.

4. Vorrichtung (100) nach Anspruch 2 oder 3, wobei die genannten Öffnungen aus der Gruppe ausgewählt sind, die Folgendes umfasst:
- parallele lineare Öffnungen (200) mit einer optionalen Breite im Bereich von 10 Mikrometern bis 30 Mikrometern und einem gegenseitigen Abstand im Bereich von 50 Mikrometern bis 300 Mikrometern, und
- kreisförmige Löcher (250) mit einem optionalen Durchmesser im Bereich von 10 Mikrometern bis 30 Mikrometern, die gemäß einem Matrixmuster angeordnet sind, wobei die kreisförmigen Löcher (250) optional an den Ecken von aneinandergrenzenden gleichen Parallelogrammen, optional Rhomben, optional Quadraten angeordnet sind, wobei jedes kreisförmige Loch (250) von den vier nächstgelegenen kreisförmigen Löchern (250) um einen gleichen Abstand, optional im Bereich von 50 Mikrometern bis 300 Mikrometern, beabstandet ist.

5. Vorrichtung (200) nach Anspruch 1, wobei die strukturiertes Licht erzeugende Komponente eine Anordnung (13) von strukturiertes Licht erzeugenden Mikrolinsen (596) umfasst, die ein Substrat (590) umfasst, das auf einer Fläche mit einer Vielzahl von Mikrolinsen (596) versehen ist, die so konfiguriert sind, dass sie den strukturierten Lichtstrahl erzeugen, der auf eine Brennebene (3a) fokussiert ist.

6. Vorrichtung (200) nach Anspruch 5, wobei die Mikrolinsen (596) aus der Gruppe ausgewählt sind, die Folgendes umfasst:
- im Allgemeinen zylindrische lineare Mikrolinsen, die so konfiguriert sind, dass sie den strukturierten Lichtstrahl gemäß parallelen Linien auf die Brennebene (3a) fokussieren, wobei die parallelen Linien eine Breite haben, die optional in einem Bereich von 10 Mikrometer bis 30 Mikrometer liegt, und einen gegenseitigen Abstand, der optional in einem Bereich von 50 Mikrometer bis 300 Mikrometer liegt, und
- im Allgemeinen halbkreisförmige Mikrolinsen, die so konfiguriert sind, dass sie den strukturierten Lichtstrahl auf die Brennebene (3a) gemäß kreisförmigen Punkten fokussieren, die gemäß einem Matrixmuster angeordnet sind, wobei die kreisförmigen Punkte einen Durchmesser aufweisen, der optional in einem Bereich von 10 Mikrometer bis 30 Mikrometer liegt, und optional an den Ecken von benachbarten gleichen Parallelogrammen, mehr optional Rhomben, noch mehr optional Quadraten angeordnet sind, wobei jeder kreisförmige Punkt von den nächstgelegenen vier kreisförmigen Punkten (250) um einen gleichen Abstand beabstandet ist, der optional in einem Bereich von 50 Mikrometer bis 300 Mikrometer liegt.

7. Vorrichtung (200) nach Anspruch 5 oder 6, wobei das Substrat (590) der Anordnung (13) von Mikrolinsen (596) mit einer lichtdurchlässigen Beschichtung (592) versehen ist, die optional aus einem Material auf Chrombasis hergestellt ist und einer Photolithographie gemäß einem geometrischen Muster unterzogen wurde, so dass die Beschichtung (592) in Übereinstimmung mit den Mikrolinsen (596) fehlt, wobei jede Mikrolinse (596) optisch mit einer entsprechenden, in der Beschichtung (592) hergestellten Öffnung (576) ausgerichtet ist.

8. Vorrichtung (100) nach Anspruch 1, wobei die strukturierte lichterzeugende Komponente eine digitale Mikrospiegelvorrichtung umfasst.

9. Vorrichtung (100; 200) nach einem der vorhergehenden Ansprüche, wobei der Satz von Zwischenlinsen eine erste Zwischenlinse (4a), eine zweite Zwischenlinse (4b) und eine dritte Zwischenlinse (4c) umfasst und die optischen Mittel (5; 6) einen dichroitischen Filter (5) umfassen, wobei die erste Zwischenlinse (4a) so konfiguriert ist, dass sie von dem strukturierten Lichtstrahl durchquert wird, der dichroitische Filter (5) so konfiguriert ist, dass er den von der ersten Zwischenlinse (4a) kommenden strukturierten Lichtstrahl in Richtung der zweiten Zwischenlinse (4b) reflektiert, die so konfiguriert ist, dass sie den strukturierten Lichtstrahl auf die sich drehende Scheibe (7) fokussiert, wobei der dichroitische Filter (5) ferner so konfiguriert ist, dass er den von der sich drehenden Scheibe (7) kommenden emittierten Fluoreszenzstrahl in Richtung des Gehäuses durchlässt, das so konfiguriert ist, dass es den Erfassungssensor (11) aufnimmt.

10. Vorrichtung (100; 200) nach Anspruch 9, wobei das optische Mittel (5; 6) ferner einen Emissionsfilter (6) umfasst, der zwischen dem dichroitischen Filter (5) und dem Gehäuse angeordnet ist, das zur Aufnahme des Erfassungssensors (11) konfiguriert ist, wobei der Emissionsfilter (6) so konfiguriert ist, dass er den emittierten Fluoreszenzstrahl, der von dem dichroitischen Filter (5) kommt, selektiv in Richtung des zur Aufnahme des Erfassungssensors (11) konfigurierten Gehäuses durchlässt.

11. Vorrichtung (100; 200) nach Anspruch 10, wobei der Emissionsfilter (6) zwei oder mehr Abschnitte umfasst, von denen jeder so konfiguriert ist, dass er nur von einem entsprechenden Teil des emittierten Fluoreszenzstrahls mit einem entsprechenden Wellenlängenbereich durchquert wird.

12. Vorrichtung (100; 200) nach Anspruch 11, wobei der Emissionsfilter (6) auf einem Wellenlängenselektor montiert ist, wobei der Wellenlängenselektor optional ein motorisiertes Rad und/oder mindestens eine piezoelektrische Vorrichtung und/oder mindestens eine motorisierte Vorrichtung umfasst.

13. Vorrichtung (100; 200) nach einem der vorhergehenden Ansprüche, die außerdem Folgendes umfasst: eine Lichtquelle (1), die so konfiguriert ist, dass sie den Basis-Lichtstrahl emittiert;
einen Erfassungssensor (11), der in dem Gehäuse untergebracht und so konfiguriert ist, dass er einen von der Ebene der Probe (10) emittierten Fluoreszenzstrahl erfasst; und
- eine Verarbeitungszentraleinheit (16), die so konfiguriert ist, dass sie von dem Erfassungssensor (11) eine Vielzahl von Teilerfassungen (700A, 700B, ..., 700N) der Ebene der Probe (10) empfängt und diese Vielzahl von Teilerfassungen (700A, 700B, ..., 700N) zu einem Endbild (80) der Ebene der Probe (10) durch Verarbeitung mit Dekonvolutionsalgorithmen der strukturierten Lichtmikroskopie kombiniert.

14. Vorrichtung (100; 200) nach Anspruch 13, wobei die Verarbeitungszentraleinheit (16) einen oder mehrere Grafikprozessoren oder GPUs umfasst.

15. Verfahren zum Erfassen und Verarbeiten von Bildern in der Konfokalmikroskopie mit strukturierten Licht, umfassend die folgenden Schritte:
A. Bewirken, dass eine sich drehende Scheibe (7) von einem strukturierten Lichtstrahl durchquert wird, um einen resultierenden Anregungslichtstrahl zu erhalten, wobei die sich drehende Scheibe (7) ein scheibenförmiges Substrat (490) aus einem optisch transparenten Material umfasst, wobei das Substrat (490) der sich drehenden Scheibe (7) eine ebene erste Oberfläche (456) und eine gegenüberliegende ebene zweite Oberfläche (460) und eine strukturierte Maske (492) umfasst, die auf der ersten Oberfläche (456) oder der zweiten Oberfläche (460) angeordnet ist und mindestens einen Sektor umfasst, der mit einer oder mehreren kontinuierlichen spiralförmigen Schlitzöffnungen (476) versehen ist, wobei die strukturierte Maske (492) oder eine äußere Oberfläche davon aus einem hochschwarzen, für Licht undurchlässigen Material besteht;
B. Fokussieren des resultierenden Anregungsstrahls auf eine Ebene einer Probe (10);
C. Erfassen einer Vielzahl von Teilerfassungen (700A, 700B, ..., 700N) der Ebene der Probe (10); und
D. Kombinieren einer solchen Vielzahl von Teilerfassungen (700A, 700B, ..., 700N) zu einem endgültigen Bild (80) der genannten Ebene der Probe (10) durch Verarbeitung mit Dekonvolutionsalgorithmen der strukturierten Lichtmikroskopie.

## Revendications

1. Appareil de microscopie confocale (100 ; 200), comprenant :
- un composant générateur de lumière structurée (2 ; 13) conçu pour être éclairé avec un faisceau de lumière de base et pour générer un faisceau de lumière structurée focalisé sur un premier plan (3a) ;
- un disque tournant (7) conçu pour recevoir ledit faisceau de lumière structurée et pour transmettre un faisceau d'excitation résultant à une optique (8, 9) d'un microscope (15) focalisé sur un plan d'un échantillon (10), le disque tournant (7) se trouvant sur un deuxième plan (3b) et comprenant un substrat en forme de disque (490) composé d'un matériau optiquement transparent, le substrat (490) du disque tournant (7) comprenant une première surface plane (456) et une seconde surface plane opposée (460) ainsi qu'un masque à motifs (492) positionné sur l'une de la première surface (456) et de la seconde surface (460) et comprenant au moins un secteur pourvu d'une ou de plusieurs ouvertures à fente en spirale continue (476), le masque à motifs (492) ou une surface externe de celui-ci étant composé(e) d'un matériau hautement noir opaque à la lumière ;
- un boîtier conçu pour loger sur un troisième plan (3c) un capteur d'acquisition (11) conçu pour détecter un faisceau fluorescent émis depuis ledit plan de l'échantillon (10) ;
- un ensemble de lentilles relais (4a, 4b, 4c) conçu pour conjuguer optiquement le premier plan (3a), le deuxième plan (3b) et ledit plan de l'échantillon (10) au troisième plan (3c) ;
- des moyens optiques (5, 6) conçus pour transmettre ledit faisceau de lumière structurée du le composant générateur de lumière structurée (2 ; 13) jusqu'audit plan de l'échantillon (10) et ledit faisceau fluorescent émis depuis ledit plan de l'échantillon (10) jusqu'audit boîtier conçu pour loger le capteur d'acquisition (11) ; et
- des moyens de déplacement conçus pour déplacer le composant générateur de lumière structurée (2 ; 13), de manière à décaler le faisceau de lumière structurée dans le premier plan (3a), et le disque tournant (7) dans le deuxième plan (3b).

2. Appareil (100) selon la revendication 1, où le composant générateur de lumière structurée comprend un substrat générateur de lumière structurée (2) pourvu d'au moins un secteur (20A, 20B ; 25A, 25B) ayant un masque (210 ; 260) de matériau opaque à la lumière selon un motif géométrique pourvu d'une pluralité d'ouvertures (200 ; 250) de matériau optiquement transparent conçues pour faire passer ledit faisceau de lumière de base de manière à obtenir un faisceau de lumière structurée, de façon que le premier plan (3a) soit le plan sur lequel le substrat générateur de lumière structurée (2) repose.

3. Appareil (100) selon la revendication 2, où le substrat générateur de lumière structurée (2) est fait du matériau optiquement transparent, optionnellement du verre, ayant un revêtement (210) opaque à la lumière, optionnellement réalisé en un matériau à base de chrome, pourvu desdites ouvertures (200 ; 250), optionnellement réalisées par photolithographie.

4. Appareil (100) selon la revendication 2 ou 3, où lesdites ouvertures sont sélectionnées dans le groupe comprenant :
- des ouvertures linéaires parallèles (200), présentant une largeur allant optionnellement de 10 micromètres à 30 micromètres et une distance mutuelle allant optionnellement de 50 micromètres à 300 micromètres, et
- des trous circulaires (250), présentant un diamètre variant optionnellement de 10 micromètres à 30 micromètres, positionnés selon un motif matriciel, les trous circulaires (250) étant optionnellement positionnés au niveau des sommets de parallélogrammes égaux contigus, plus optionnellement de losanges, encore plus optionnellement de carrés, chaque trou circulaire (250) étant espacé des quatre trous circulaires (250) les plus proches d'une égale distance allant optionnellement de 50 micromètres à 300 micromètres.

5. Appareil (200) selon la revendication 1, où le composant générateur de lumière structurée comprend un réseau (13) de microlentilles génératrices de lumière structurée (596), comprenant un substrat (590) prévu sur une face avec une pluralité de microlentilles (596) conçues pour générer ledit faisceau de lumière structurée focalisé sur un plan focal (3a).

6. Appareil (200) selon la revendication 5, où lesdites microlentilles (596) sont choisies dans le groupe comprenant :
- des microlentilles linéaires globalement cylindriques conçues pour focaliser le faisceau de lumière structurée sur le plan focal (3a) selon des lignes parallèles, lesdites lignes parallèles présentant une largeur allant optionnellement de 10 micromètres à 30 micromètres et une distance mutuelle allant optionnellement de 50 micromètres à 300 micromètres, et
- des microlentilles globalement semi-circulaires conçues pour focaliser le faisceau de lumière structurée sur le plan focal (3a) selon des points circulaires positionnés selon un motif matriciel, lesdits points circulaires présentant un diamètre allant optionnellement de 10 micromètres à 30 micromètres, et étant optionnellement positionnés au niveau des sommets de parallélogrammes égaux contigus, plus optionnellement de losanges, encore plus optionnellement de carrés, de façon que chaque point circulaire soit espacé des quatre points circulaires les plus proches (250) par une égale distance allant optionnellement de 50 micromètres à 300 micromètres.

7. Appareil (200) selon la revendication 5 ou 6, où le substrat (590) du réseau (13) de microlentilles (596) est pourvu d'un revêtement (592) opaque à la lumière, optionnellement réalisé en un matériau à base de chrome, ayant subi une photolithographie selon un motif géométrique de façon que le revêtement (592) soit absent en correspondance avec les microlentilles (596), chaque microlentille (596) étant optiquement alignée avec une ouverture correspondante (576) réalisée dans le revêtement (592).

8. Appareil (100) selon la revendication 1, où le composant générateur de lumière structurée comprend un dispositif de micromiroir numérique.

9. Appareil (100 ; 200) selon l'une quelconque des revendications précédentes, où ledit ensemble de lentilles relais comprend une première lentille relais (4a), une deuxième lentille relais (4b) et une troisième lentille relais (4c), et lesdits moyens optiques (5 ; 6) comprennent un filtre dichroïque (5), la première lentille relais (4a) étant conçue pour être traversée par ledit faisceau de lumière structurée, le filtre dichroïque (5) étant conçu pour refléter ledit faisceau de lumière structurée provenant de la première lentille relais (4a) vers la deuxième lentille relais (4b) qui est conçue pour focaliser ledit faisceau de lumière structurée sur le disque tournant (7), le filtre dichroïque (5) étant en outre conçu pour laisser ledit faisceau fluorescent émis provenant du disque tournant (7) passer vers ledit boîtier conçu pour loger le capteur d'acquisition (11).

10. Appareil (100 ; 200) selon la revendication 9, où lesdits moyens optiques (5 ; 6) comprennent en outre un filtre d'émission (6) interposé entre le filtre dichroïque (5) et ledit boîtier conçu pour loger le capteur d'acquisition (11), le filtre d'émission (6) étant conçu pour laisser sélectivement ledit faisceau fluorescent émis provenant du filtre dichroïque (5) passer vers ledit boîtier conçu pour loger le capteur d'acquisition (11).

11. Appareil (100 ; 200) selon la revendication 10, où le filtre d'émission (6) comprend deux parties ou plus dont chacune est conçue pour être traversée uniquement par une partie respective dudit faisceau fluorescent émis présentant une plage de longueurs d'onde correspondante.

12. Appareil (100 ; 200) selon la revendication 11, où le filtre d'émission (6) est monté sur un sélecteur de longueur d'onde, ledit sélecteur de longueur d'onde comprenant optionnellement une roue motorisée et/ou au moins un dispositif piézoélectrique et/ou au moins un dispositif motorisé.

13. Appareil (100 ; 200) selon l'une quelconque des revendications précédentes, comprenant également :
- une source lumineuse (1) conçue pour émettre ledit faisceau de lumière de base ;
- un capteur d'acquisition (11) logé dans ledit boîtier et conçu pour détecter un faisceau fluorescent émis depuis ledit plan de l'échantillon (10) ; et
- une unité centrale de traitement (16) conçue pour recevoir du capteur d'acquisition (11) une pluralité d'acquisitions partielles (700A, 700B, ..., 700N) dudit plan de l'échantillon (10) et pour combiner cette pluralité d'acquisitions partielles (700A, 700B, ..., 700N) en une image finale (80) dudit plan de l'échantillon (10) par traitement avec des algorithmes de déconvolution en microscopie à lumière structurée.

14. Appareil (100 ; 200) selon la revendication 13, où l'unité centrale de traitement (16) comprend un ou plusieurs processeurs graphiques ou GPUs.

15. Procédé d'acquisition et de traitement d'images en microscopie confocale à lumière structurée, comprenant les étapes suivantes :
A. faire traverser un disque tournant (7) par un faisceau de lumière structurée pour obtenir un faisceau de lumière d'excitation résultant, le disque tournant (7) comprenant un substrat en forme de disque (490) composé d'un matériau optiquement transparent, le substrat (490) du disque tournant (7) comprenant une première surface plane (456) et une seconde surface plane opposée (460) ainsi qu'un masque à motifs (492) positionné sur l'une de la première surface (456) et de la seconde surface (460) et comprenant au moins un secteur pourvu d'une ou de plusieurs ouvertures à fente en spirale continue (476), le masque à motifs (492) ou une surface externe de celui-ci étant composé(e) d'un matériau hautement noir opaque à la lumière ;
B. focaliser le faisceau d'excitation résultant sur un plan d'un échantillon (10) ;
C. acquérir une pluralité d'acquisitions partielles (700A, 700B, ..., 700N) dudit plan de l'échantillon (10) ; et
D. combiner une telle pluralité d'acquisitions partielles (700A, 700B, ..., 700N) en une image finale (80) dudit plan de l'échantillon (10) par traitement avec des algorithmes de déconvolution en microscopie à lumière structurée.
